(19) Europäisches Patentamt
European Patent Office
Office européen des brevets

(11) **EP 2 383 681 A1**

(12) **EUROPÄISCHE PATENTANMELDUNG**

(43) Veröffentlichungstag:
 **02.11.2011 Patentblatt 2011/44**

(51) Int Cl.:
 ***G06K 9/46*** *(2006.01)*

(21) Anmeldenummer: **11003136.6**

(22) Anmeldetag: **14.04.2011**

(84) Benannte Vertragsstaaten:
 **AL AT BE BG CH CY CZ DE DK EE ES FI FR GB
 GR HR HU IE IS IT LI LT LU LV MC MK MT NL NO
 PL PT RO RS SE SI SK SM TR**
 Benannte Erstreckungsstaaten:
 **BA ME**

(30) Priorität: **28.04.2010 DE 102010018477**

(71) Anmelder: **Diehl BGT Defence GmbH & Co.KG
 88662 Überlingen (DE)**

(72) Erfinder: **Koch, René
 88662 Überlingen (DE)**

(74) Vertreter: **Diehl Patentabteilung
 c/o Diehl Stiftung & Co. KG
 Stephanstrasse 49
 90478 Nürnberg (DE)**

(54) **Bildverarbeitungsverfahren zum Klassifizieren eines Objekts**

(57) Es wird ein Bildverarbeitungsverfahren zum Klassifizieren eines Objekts (4) vorgeschlagen, bei dem aus einer Aufnahme des Objekts (4) ein Gradientenrichtungsbild (10) erstellt wird und das Klassifizieren des Objekts (4) anhand von Bildeigenschaften des Gradientenrichtungsbilds (10) durchgeführt wird. Mit Hilfe von Bildeigenschaften des Gradientenrichtungsbilds (10) können Objekte (4) allgemein und eindeutig beschrieben werden.

Fig. 9

EP 2 383 681 A1

**Beschreibung**

Die Erfindung betrifft ein Bildverarbeitungsverfahren zum Klassifizieren eines Objekts. Derartige Verfahren sind aus der Personenüberwachung und der Gepäcküberwachung bekannt. Eine Person oder ein Gepäckstück wird in einem geeigneten Frequenzbereich abgebildet und die Aufnahme wird mittels Bildverarbeitungsverfahren auf bestimmte Objekte, wie Waffen oder Sprengstoff, untersucht. Hierbei werden vordefinierte Formmerkmale aus der Aufnahme extrahiert und es werden Klassifikatoren verwendet, um in den Merkmalsräumen eine Trennung von Klassen von Objekten anhand der Merkmalswerte zu ermöglichen. Weiter ist es bekannt, neuronale Netzwerke einzusetzen zum merkmalsbasierten Klassifikation von Objekten und zur direkten Klassifikation von Bildausschnitten.

Es ist eine Aufgabe der Erfindung, ein Bildverarbeitungsverfahren anzugeben, mit dem Objekte in schneller und zuverlässiger Weise klassifiziert werden können.

Diese Aufgabe wird erfindungsgemäß durch ein Bildverarbeitungsverfahren zum Klassifizieren eines Objekts gelöst, bei dem aus einer Aufnahme des Objekts ein Gradientenrichtungsbild erstellt wird und das Klassifizieren des Objekts anhand von Bildeigenschaften des Gradientenrichtungsbilds durchgeführt wird.

Ein Gradientenrichtungsbild kann Kanten und Konturen in einer Aufnahme hervorheben, wobei durch Filterparameter, die Wahl der betrachteten Bildeigenschaften und/oder von Klassifizierungsregeln in einfacher Weise eingestellt werden kann, welche Art von Kanten oder Konturen von Bedeutung sein sollen. So kann beispielsweise auf scharfe Kanten oder weiche Übergänge eingestellt werden, so dass Bildeigenschaften unterdrückt oder hervorgehoben werden können. Insbesondere können Richtungen von Konturen hervorgehoben werden, so dass zwischen horizontal und vertikal ausgerichteten Konturen unterschieden werden kann. Mittels einer Klasseneinteilung, die mehrere Objektklassen umfasst, die von Klasse zu Klasse unterschiedliche Bildeigenschaften aufweisen, bzw. Klassifizierungsregeln können Objekte einklassifiziert und hiermit unterschieden werden.

Das Klassifizieren des Objekts erfolgt anhand von Bildeigenschaften des Gradientenrichtungsbilds, also unter Verwendung der Bildeigenschaften. Es kann ein Einsortieren eines Objekts in eine oder mehrere von zweckmäßigerweise vordefinierten Klassen beinhalten, wobei die Klassen jeweils Bestandteil einer Klasseneinteilung sind, die eine Vielzahl solcher Klassen umfasst. Mittels Klassifizierungsregeln, die vorteilhafterweise vorbestimmt sind, kann festgelegt werden, in welche Klasse ein Objekt anhand seiner Bildeigenschaften einsortiert wird. Die Klassifizierung kann unter Verwendung einer oder mehrerer Klassifizierungsregeln erfolgen. Verschiedene Objekte können unter Verwendung verschiedener Bildeigenschaften oder gleicher Bildeigenschaften und verschiedener Klassifizierungsregeln einklassifiziert werden.

Das Objekt kann jeder abbildbare Gegenstand sein, insbesondere Personen, Fahrzeuge, Koffer oder Waffen. Die Aufnahme kann in jedem geeigneten Frequenzbereich erfolgen, z. B. mit sichtbarem Licht, Infrarotstrahlung oder Terrahertzstrahlung. Sie kann eine reine Hell-Dunkel-Aufnahme sein oder eine Farbaufnahme mit mehreren voneinander unterschiedenen Farben, die nicht auf den sichtbaren Frequenzbereich begrenzt sein müssen.

Ein Gradientenrichtungsbild umfasst zweckmäßigerweise eine Vielzahl von insbesondere matrixförmig angeordneten Gradientenbildelementen. Der Begriff des "Bilds" ist hierbei weit zu sehen. Ein Bild, z. B. ein Gradientenrichtungsbild, wird im Folgenden auch dann als solches bezeichnet, wenn es lediglich als Datensatz aus Bilddaten vorliegt, aus dem das Bild, z. B. das Gradientenrichtungsbild, erstellbar ist. Es muss daher kein als solches dargestelltes Bild sein.

Ein Gradientenbildelement kann die Bildgröße eines Pixels der Aufnahme haben. Jedes Pixel der Aufnahme kann so mit genau einem Gradientenbildelement korrespondieren. Jedem Gradientenbildelement können ein oder mehrere Gradienten zugeordnet sein. Ein Gradient gibt eine Änderung eines Bildparameters an. Die Änderung kann die Änderungsrichtung und Änderungsstärke umfassen. Der Bildparameter kann die Bildhelligkeit, die Helligkeit nur einer Farbe oder ein anderer geeigneter Parameter sein. Die Änderung eines Bildparameters wird durch die Gradienteneigenschaft des Gradienten beschrieben. Eine Gradienteneigenschaft kann eine Ausrichtung des Gradienten, z. B. in einen vorbestimmten Richtungsbereich, oder eine Größe des Gradienten sein. Der Gradient bzw. seine Gradienteneigenschaft ist zweckmäßigerweise durch einen oder mehrere Gradientenparameter beschrieben, beispielsweise in Form eines Vektors mit einer Richtung und einer Länge. Die Gradientenparameter können Koordinatenparameter sein. Das dazugehörige Koordinatensystem kann kartesisch, polar oder anders geeignet gestaltet sein und nur eindimensional oder mehrdimensional sein, z. B. zwei- oder dreidimensional. Als dritte Dimension kann eine Farbfrequenz oder ein anderer Parameter dienen.

In einer Aufnahme, die beispielsweise einen Menschen in der Natur abbildet, sind sehr viele Gegenstände abgebildet, die für eine Auswertung uninteressant sind, z. B. Blätter oder Pflanzen allgemein, eine Landschaft, usw. Um eine Bildauswertung möglichst konzentriert auf interessierende Objekte auszurichten, ist es vorteilhaft, wenn eine Filterung durchgeführt wird. Die Filterung wird vorteilhafterweise auf das Gradientenrichtungsbild angewendet, wobei eine vorhergehende Filterung von Bilddaten der Aufnahme zusätzlich möglich ist. So ist beispielsweise eine Filterung vorteilhaft, die Gradienten unterhalb einer vorbestimmten Größe unterdrückt. Gradientenbildelemente mit einem Gradienten unterhalb dieser Größe können so aus der Auswertung herausgenommen werden. Hierdurch werden beispielsweise geringe Gebiete geringer Helligkeitsschwankungen in der Aufnahme, wie ein gleichmäßiger Hintergrund, aus der Auswertung herausgenommen und nur kontrastreichere Gebiete werden der Auswertung zugeführt.

Eine entsprechende Ausführungsform der Erfindung sieht vor, dass zum Ermitteln der Bildeigenschaften eine Filterung des Gradientenrichtungsbilds nach Gradientgröße durchgeführt wird und nur solche Gradienten berücksichtigt werden, die größer als ein Schwellwert sind. Als Gradientgröße kann eine Länge eines Gradientvektors bezeichnet werden. Durch die Filterung können Gradienten bzw. Gradientenbildelemente herausgefiltert werden, deren Gradientgröße unterhalb einer vorgegebenen Schwelle liegen. Der Schwellwert ist zweckmäßigerweise vorbestimmt.

Eine weitere vorteilhafte Ausführungsform der Erfindung sieht vor, dass zum Klassifizieren des Objekts ein Binärsegmentationsalgorithmus angewandt wird, so dass aus dem Gradientenrichtungsbild zumindest ein binäres Bild entsteht. Ein binäres Bild ist einfach auszuwerten und konzentriert die Auswertung auf eine Eigenschaft. Ein binäres Bild besteht zweckmäßigerweise nur aus Bildpunkten, z. B. Gradientenbildelementen, mit einer binär gekennzeichneten Eigenschaft. Zu jedem Bildpunkt liegt somit nur die Information 0 oder 1 vor. Anhand eines binären Bilds können beispielsweise Segmente in einfacher Weise gebildet werden, z. B. als zusammenhängende Bildpunkte mit gleichem binären Ergebnis, also 0 oder 1. Zum Herstellen des binären Bilds kann ein Bildparameter verwendet werden, beispielsweise ein Helligkeitsgradient. Liegt in einem Bildpunkt ein Helligkeitsgradient in einen vorbestimmten Richtungsbereich vor, wird die "1" vergeben, ansonsten die "0". Zweckmäßigerweise wird zu mehreren Richtungsbereichen jeweils ein binäres Bild erzeugt, insbesondere zu jedem Richtungsbereich, der vordefiniert wurde. Auch ein Vergleich von binären Bildern aus einer Aufnahme des Objektes ist vorteilhaft. Werden beispielsweise vier Richtungsbereiche vordefiniert und zu jedem ein binäres Bild erzeugt, so lassen sich aus einem Vergleich der vier binären Bilder vorteilhafte Rückschlüsse auf Bildinhalte der Aufnahme ziehen lassen.

Um eine einfache und vom Ergebnis zufrieden stellende Klassifizierung eines Objekts zu erreichen, kann das Gradientenrichtungsbild zunächst gefiltert werden, so dass nur Teile des Gradientenrichtungsbilds einer weiteren Untersuchung zugeführt werden. Aus diesen Teilen können die Segmente gebildet werden, z. B. durch den Binärsegmentationsalgorithmus. Es können Segmente mit unterschiedlicher Gradienteigenschaft gebildet werden, z. B. indem der Binärsegmentationsalgorithmus mehrfach und mit unterschiedlichem Segmentationsparameter auf das Gradientenrichtungsbild angewandt wird. Die Segmente können gefiltert werden, z. B. indem nur Segmente über einer vorbestimmten Größe weiter verarbeitet werden. Die Größe kann eine Mindestzahl an Gradientenbildelementen sein. Geeignet sind Segmente mit mindestens 4, zweckmäßigerweise mindestens 10, insbesondere mindestens 50 Gradientenbildelementen. Die Größe kann des Weiteren eine Fläche oder Ausdehnung des Gradientenrichtungsbild in eine vorbestimmte Richtung oder eine maximale Ausdehnung in irgendeine Richtung sein. Hierzu äquivalent kann eine Mindestgröße eines Gebiets der Aufnahme sein.

Eine weitere vorteilhafte Ausführungsform der Erfindung sieht vor, dass einzelne Segmente des Gradientenrichtungsbilds, die jeweils aus ein zusammenhängendes Bildgebiet bildenden Gradientenbildelementen bestehen, ermittelt werden, wobei die Bildeigenschaften des Gradientenrichtungsbilds zumindest eine Segmenteigenschaft zumindest eines Segments enthalten. Durch die Auswahl von Segmenten, deren Gradientenbildelemente zweckmäßigerweise alle eine vorbestimmte Gradienteigenschaft aufweisen, kann das Gradientenrichtungsbild in einfacher Weise auf eine oder mehrere ausgewählte Bildeigenschaften untersucht werden.

Die Segmente sind zweckmäßigerweise separat voneinander, d.h. sie überdecken einander nicht. Sie bilden jeweils ein zusammenhängendes Bildgebiet aus mehreren Gradientenbildelementen. Ein Zusammenhängen kann eine Verbindung über Eck einschließen oder ausschließen. Zur Bildung eines Segments werden vorteilhafterweise nur solche Gradientenbildelemente gewählt, die zumindest eine gleiche Gradienteigenschaft aufweisen. So ist es beispielsweise vorteilhaft, wenn die Segmente jeweils ein zusammenhängendes Bildgebiet bilden, in dem die Gradientenrichtungen aller Gradientenbildelemente innerhalb eines Richtungsbereichs liegen. Der Richtungsbereich kann einen Winkelbereich von $\pm$ 90° um eine vorbestimmte Bezugsrichtung einschließen, zweckmäßigerweise $\pm$ 60°, insbesondere $\pm$ 45°.

Anhand der Segmente kann das Objekt als solches im Gradientenrichtungsbild erkannt werden. Das Erkennen muss keine Klassifizierung einschließen, da es ausreicht, zunächst zu erkennen, dass ein interessierendes Objekt vorliegt. Das Klassifizieren kann als späterer Schritt erfolgen. Es ist jedoch auch möglich, das Erkennen mit dem Klassifizieren zu verbinden, bzw. auf das Erkennen zu verzichten und das Objekt direkt zu klassifizieren.

Das Erkennen und/oder Klassifizieren kann durch ein Auswerten der Segmente hinsichtlich einer Segmenteigenschaft erfolgen. Eine verarbeitete Segmenteigenschaft kann die Form eines oder mehrerer Segmente sein, eine Größe eines Segments, die Lage eines Segments im Gradientenrichtungsbild, und/oder eine Hauptrichtung des Segments in Bezug zu einer vorbestimmten Richtung im Gradientenrichtungsbild bzw. in der Abbildung. Eine Hauptrichtung kann diejenige Richtung sein, in die ein Segment seine größte Ausdehnung hat. Eine weitere Segmenteigenschaft kann eine Länglichkeit eines Segments sein, die einer festgelegten mathematischen Methode festgestellt wird. So ist die Länglichkeit eines Quadrats beispielsweise 1, die Länglichkeit eines Rechtecks mit den Kantenlängen 4,2 : 1 ist 4,2 und die Länglichkeit einer Ellipse das Verhältnis der Großen zur kleinen Halbachse.

Weiter kann eine Beziehung von Segmenten zueinander eine Segmenteigenschaft sein. Eine Beziehung kann das Vorhandensein mehrerer Segmente in einem Bereich des Gradientenrichtungsbilds bzw. in der Abbildung sein, z. B. Segmente, die größer als eine vorgegebene Größe sind, mehrere gleich ausgerichtete oder innerhalb eines Richtungsbereichs ausgerichtete Segmente, mehrere Segmente gleicher Form oder einer Form innerhalb eines vorgegebenen Formbereichs, und dergleichen. Eine Beziehung kann weiter die Lage richtungsgleicher und formähnlicher Segmente zueinander sein, die Menge von formähnlichen und formunähnlichen Segmenten in einem Objekt bzw. einem Bereich und/oder die Lage von formähnlichen und formunähnlichen Segmenten zueinander.

Anschließend oder zusammen mit dem Auswerten der Segmenteigenschaft kann ein Vergleich der Segmenteigenschaft mit Klassifizierungsregeln erfolgen, die mehreren oder allen Klassen der Klasseneinteilung vorbestimmte Segmenteigenschaften vorgeben. Entsprechend der Auswertung der Segmenteigenschaften wird ein Einordnen der Segmente in eine Klasse vorgenommen. Durch die Zuordnung der Segmente zu einem Objekt kann das Objekt in die Klasse eingeordnet und hiermit klassifiziert werden.

Die einzelnen Klassen der Klasseneinteilung können jeweils Arten von Objekten umfassen, z. B. eine Klasse für Personen, eine für Personengruppen, für bodengebundene Fahrzeuge, für Gebäude und dergleichen.

In einer Ausführungsform des zuvor Beschriebenen wird vorgeschlagen, dass eine Segmenteigenschaft eine Beziehung von zumindest zwei Segmenten zueinander ist, wobei die Gradientenrichtungen aller Gradientenbildelemente des einen Segments innerhalb eines ersten Richtungsbereichs und die Gradientenrichtungen aller Gradientenbildelemente des anderen Segments innerhalb eines zweiten Richtungsbereichs liegen, wobei die Richtungen der Richtungsbereiche in einem vorbestimmten Verhältnis zueinander stehen. Die Richtungen können die gleiche Richtung, antiparallele Richtungen und/oder zyklische Richtungen sein, z. B. zum Erkennen des Umrisses eines Koffers.

Eine formabhängige Klassifizierung kann einfach und mit zuverlässigem Resultat anhand der jeweiligen Hauptrichtung der geometrischen Form von zumindest zwei voneinander separaten Segmenten durchgeführt werden. Die Segmente sind zweckmäßigerweise Segmente gleicher oder entgegengesetzter Gradientenrichtungen.

Weiter kann ein Segmentpaar aus zwei Segmenten des Gradientenrichtungsbilds ermittelt werden, die jeweils aus solchen Gradientenbildelementen bestehen, die ein zusammenhängendes Bildgebiet eines Richtungsbereichs bilden. Eine zuverlässige Klassifizierung kann z. B. dadurch erfolgen, dass das Objekt auf der Grundlage von Formen von zumindest zwei Segmenten und deren Lagen zueinander bestimmt wird. Auch hier sind die Segmente zweckmäßigerweise Segmente gleicher oder entgegengesetzter Gradientenrichtungen. Die Bildeigenschaften des Gradientenrichtungsbilds enthalten in dieser Ausführungsform als zumindest eine Eigenschaft des Segmentpaars. Besonders vorteilhaft ist die Untersuchung von solchen Segmentpaaren, deren Richtungsbereiche antiparallel sind und deren Hauptrichtung der insbesondere vertikal sind (Personenerkennung) oder horizontal sind (Fahrzeugerkennung).

Zur zuverlässigen Klassifizierung eines Objekts ist es außerdem vorteilhaft, wenn nur solche Segmente zur Bildung eines Segmentpaars verwendet werden, die einen vorgegebenen Maximalabstand zueinander nicht überschreiten.

Besonders geeignet zur Klassifizierung von Objekten sind Bildeigenschaften von Segmentbereichen, also Bildbereichen, in denen mehrere Segmente, insbesondere zumindest ein Segmentpaar, zumindest überwiegend liegt. Vorteilhafterweise wird der Segmentbereich von den Segmenten begrenzt, die Segmente bilden also Grenzen des Segmentbereichs. Als Grenze kann weiter ein Bereichsabschluss des Segmentpaars beidseitig senkrecht zur Richtung zumindest eines Richtungsbereichs verwendet werden, insbesondere ein Bereichsabschluss beidseitig senkrecht zur antiparallelen Richtungen des Segmentpaars. Zur Klassifizierung des Objekts wird vorteilhafterweise eine Bereichseigenschaft eines solchen Segmentbereichs ausgewertet. Eine Bereichseigenschaft kann eine räumliche Verteilung von Segmenten in einem Segmentbereich sein.

Üblicherweise enthält ein Gradientenbild mehrere einander zugeordnete Segmentpaare, die zusammen einen Segmentbereich bilden. Überlappen solche Segmentbereiche einander, so ist es vorteilhaft, solche überlappenden Segmentbereiche zu einem übergeordneten Segmentbereich zu vereinigen und als einen einzigen Segmentbereich auszuwerten, z. B. eine räumliche Verteilung von Segmenten im Segmentbereich auszuwerten.

Die Klassifizierung unterschiedlicher Objekte, wie einer Person oder einem Fahrzeug kann anhand einer Auswertung unterschiedlicher Bereichseigenschaften erfolgen, d.h. unterschiedlichen Objekten werden unterschiedliche auszuwertende Bereichseigenschaften zugeordnet. Einfacher in der Auswertung und ebenfalls zuverlässig im Ergebnis ist es, zur Klassifizierung verschiedener Objekte stets dieselben Bereichseigenschaften zu verwenden, jedoch verschiedene Klassifizierungsregeln auf dieselben Bereichseigenschaften anzuwenden.

Eine weitere vorteilhafte Ausführungsform der Erfindung sieht vor, dass das Objekt von mehreren Kameras aufgenommen wird, die jeweils zumindest eine Aufnahme des Objekts liefern, aus den Aufnahmen jeweils ein Gradientenrichtungsbild erstellt wird, aus denen jeweils Bildmerkmale abgeleitet werden, unter Verwendung derer die Objektklassifizierung des Objekts vorgenommen wird. Die Kameras können das Objekt aus unterschiedlichen Richtungen aufnehmen und/oder die Aufnahmen in unterschiedlichen Spektralbereichen machen.

Insbesondere wenn eine Klassifizierung eines Objekts anhand einer Aufnahme nicht einwandfrei gelingt, ist es vorteilhaft, ein weiteres Bild einer anderen Kamera zur Auswertung hinzuzuziehen. Hierzu wird vorgeschlagen, dass aus Bildmerkmalen, die aus einer Aufnahme einer Kamera gebildet wurden, eine Anweisung zur Aufnahme eines weiteren Bilds durch eine andere Kamera gebildet wird und die Objektklassifizierung unter Verwendung von Bildmerkmalen aus beiden Aufnahmen erfolgt. Die weitere Aufnahme kann aktiv gerade dann angefordert werden, wenn eine Auswertung zu einem unzureichenden Ergebnis geführt hat.

Zur Erkennung eines Gegenstands, der mit einer Person mitgeführt wird, z. B. eines Koffers, ist es vorteilhaft, auch die Person als solche zu erkennen. Hierzu wird vorgeschlagen, dass aus der Klassifizierung eine Person und ein Gegenstand als Objekte erkannt wird und der Gegenstand der Person zugeordnet wird. Insbesondere - aber nicht zwingenderweise - kann ein Bewegungsverlauf des Gegenstands, also ein Verlauf der Position des Gegenstands mit der Zeit, zu einem Bewegungsverlauf der Person in Beziehung gesetzt werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen. Insbesondere sind diese Merkmale jeweils einzeln und in beliebiger geeigneter Kombination mit dem erfindungsgemäßen Verfahren des unabhängigen Anspruchs kombinierbar. Das Gleiche gilt für Merkmale eines jeden Ausführungsbeispiels der nachfolgenden Figurenbeschreibung, die explizit isoliert betrachtet und mit dem erfindungsgemäßen Verfahren kombinierbar sind.

Weitere Vorteile ergeben sich aus der folgenden Zeichnungsbeschreibung. In der Zeichnung sind Ausführungsbeispiele der Erfindung dargestellt.

Es zeigen:

Fig. 1      eine Infrarotabbildung einer Person,

Fig. 2      eine neun Pixel umfassenden Bildausschnitt der Abbildung aus Fig. 1,

Fig. 3      die neun Pixel aus Fig. 2 jeweils mit Helligkeitsgradient,

Fig. 4      ein Zuordnungsschema von Gradienten zu Richtungsbereichen,

Fig. 5      die neun Pixel aus Fig. 3 jeweils mit Segmentzuordnung,

Fig. 6      ein Gradientenrichtungsbild der Infrarotabbildung aus Fig. 1, eingeteilt in Segmente,

Fig. 7      ein Segment aus Fig. 6,

Fig. 8a     die Segmente aus Fig. 6 mit waagerechten Gradienten,

Fig. 8b     die Segmente aus Fig. 6 mit senkrechten Gradienten,

Fig. 9      die großen Segmente aus Fig. 8a in Segmentbereichen und

Fig. 10     ein Schema zur Klassifizierung eines Objekts anhand von Aufnahmen aus zwei Kameras.

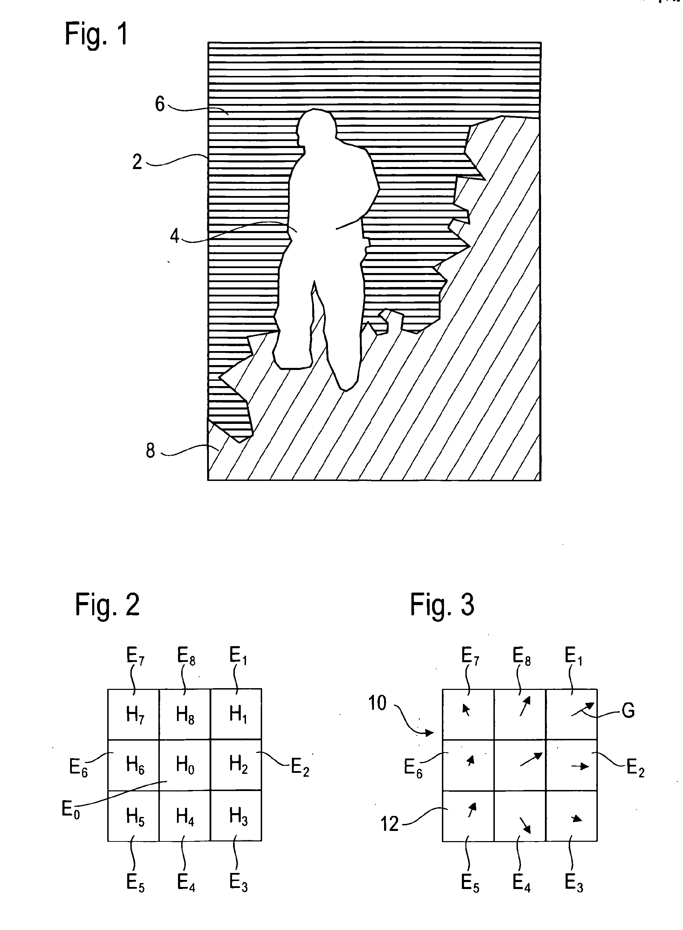

Fig. 1 zeigt eine Abbildung 2 mit einem Objekt 4, in diesem Beispiel einer Person, in einer schematischen Darstellung. Die Abbildung ist eine Infrarotabbildung, die in eine schwarz-weiß-Abbildung bzw. hell-dunkel-Abbildung transformiert ist. Die Wärme ausstrahlende Person ist durch eine helle Fläche charakterisiert, die vor einem dunklen Hintergrund 6 steht. Ein Bereich 8 des Bodens und einer Seite der Abbildung sind durch kleinflächige Wärmestrahler, z. B. Steine und Blätter, fleckig, wie durch eine schräge Schraffur angedeutet ist.

Die Person ist ein Objekt 4, das klassifiziert werden soll. Hierzu stehen in diesem Ausführungsbeispiel nur die vier Klassen

- einzelne Person
- Personengruppe
- bodengebundenes Fahrzeug und
- sonstiges Objekt

zur Verfügung, in die das Objekt 4 einklassifiziert werden kann. Je nach Aufgabenstellung der Klassifizierung können weniger oder mehr und/oder andere Klassen zur Verfügung gestellt werden. Ein Ausführungsbeispiel eines Verfahrens zur Klassifizierung des Objekts 4 ist im Folgenden dargestellt.

Zunächst wird die Abbildung 2 in eine matrixförmige Einteilung von Pixeln E eingeteilt, die sich durch die Anordnung von Detektorelementen der aufnehmenden Kamera bereits von sich aus ergeben kann.

In Fig. 2 sind neun Pixel $E_0$-$E_8$ aus der Abbildung 2 herausgegriffen. Jedes Pixel $E_0$-$E_8$ hat einen Helligkeitswert $H_0$-$H_8$, der der Helligkeit der Abbildung 2 bzw. in diesem Beispiel der Wärmestrahlung an der Stelle des Pixels $E_0$-$E_8$

im Bild entspricht. Anstelle der Helligkeitsfunktion H (x, y) kann eine andere Funktion F (x, y) gewählt werden, z. B. Übergänge zwischen Farben bei Farbaufnahmen, Polarisierungen und dergleichen.

Aus der Abbildung 2 wird ein Gradientenrichtungsbild 10 erstellt, das in Fig. 3 schematisch anhand der neun Pixel $E_0$ - $E_8$ dargestellt ist. Jedem Pixel $E_0$ - $E_8$ ist genau ein Gradientenbildelement 12 zugeordnet, das einen Gradienten G aufweist. Der Gradient G ist ein zweidimensionaler Vektor, der die Richtung und Stärke der Änderung des betrachteten Parameters des Gradientenrichtungsbilds 10 an der Stelle dieses Gradientenbildelements 12 anzeigt, z. B. die Helligkeitsänderung. Die Helligkeitsänderung bzw. der Gradient G kann in kartesischen Koordinaten berechnet werden als:

$$G(x, y) = \left( \frac{dH}{dx}, \frac{dH}{dy} \right).$$

Konkret besteht bei diskreten Pixeln die Möglichkeit z. B. folgender Berechnung:

$$G = \begin{pmatrix} H_0 - H_2 \\ H_0 - H_8 \end{pmatrix} + \begin{pmatrix} H_6 - H_0 \\ H_4 - H_0 \end{pmatrix} + \frac{1}{\sqrt{2}} \left[ \begin{pmatrix} H_0 - H_1 \\ H_0 - H_1 \end{pmatrix} + \begin{pmatrix} H_0 - H_3 \\ -H_0 + H_3 \end{pmatrix} + \begin{pmatrix} -H_0 + H_5 \\ -H_0 + H_5 \end{pmatrix} + \begin{pmatrix} -H_0 + H_7 \\ H_0 - H_7 \end{pmatrix} \right],$$

wobei auch andere Berechnungsmethoden möglich sind. Es ist auch eine Glättung möglich, die mehr als nur die ersten Nachbarn berücksichtigt. Auf diese Weise wird jedem Pixel $E_0$ - $E_8$ der Abbildung 2 - außer den Randpixeln und ggf. weiteren Pixeln, der Abbildung 2 je nach Glättung - ein Gradient G zugeordnet. Eine Umrechnung in Polarkoordinaten ordnet jedem Gradienten G jeweils eine Größe in Form einer vektoriellen Länge und eines Winkels in Bezug zu einer vordefinierten Richtung zu.

Auch möglich ist die Aufteilung des Gradientenbilds in ein Gradientenrichtungsbild und ein Gradientenbetragsbild. Das Gradientenrichtungsbild 10 aus Fig. 3 vereint beide Bilder, da sowohl die Richtung als auch der Betrag der Gradienten G erfasst ist.

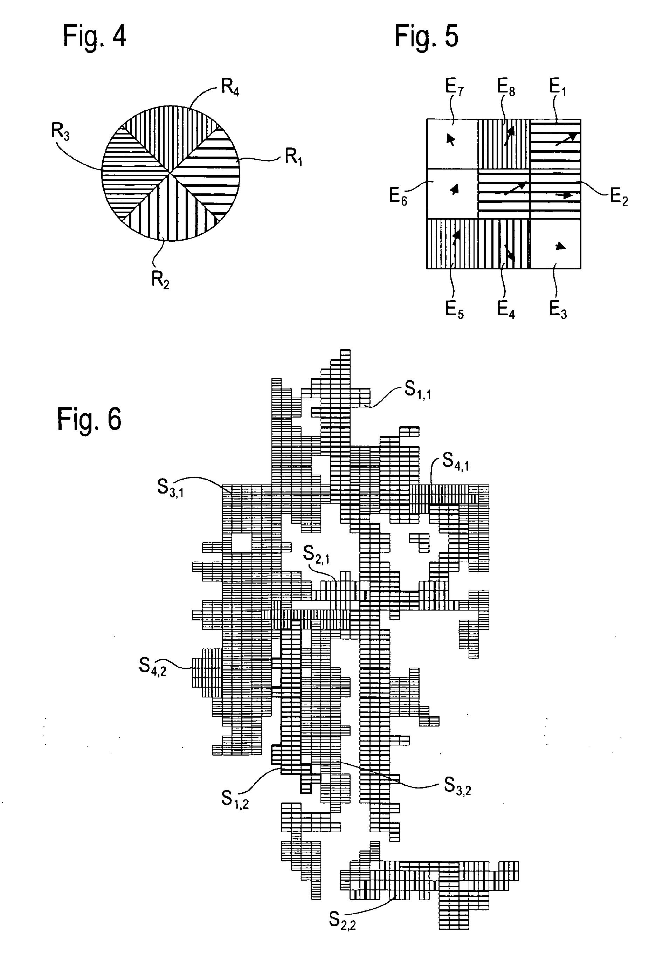

Fig. 4 zeigt eine Einteilung sämtlicher möglicher Richtungen im zweidimensionalen Abbildungsraum in vier Richtungsbereiche $R_1$ - $R_4$. Jeder Richtungsbereich $R_1$ - $R_4$ schließt einen Winkelbereich von 90° ein und ist in Fig. 4 durch eine charakteristische Schraffur angedeutet, die in den Figuren 5 und 6 mit gleichem Bezug auf die Richtungsbereiche $R_1$ - $R_4$ übernommen ist. Selbstverständlich sind auch eine andere Zahl von Richtungsbereichen und andere Winkelbereiche möglich.

In Fig. 5 sind die gleichen neun Gradientenbildelemente 12 mit ihrem Gradient G wiedergegeben, wobei jeder Gradient G, dessen Größe über einer vorbestimmten Größe bzw. eines Schwellwerts liegt, in einen Richtungsbereich $R_1$ - $R_4$ einsortiert wurde. Durch das Herausfiltern der Gradienten G unterhalb des Schwellwerts werden solche Bereiche herausgefiltert, die nur kleine Helligkeitsänderungen haben, wie z. B. der gleichmäßig dunkle Hintergrund 6 in Abbildung 2. Diese Bereiche sind in Fig. 5 ohne Schraffur wiedergegeben. Im weiteren Verlauf des Verfahrens spielt die Größe der Gradienten G keine Rolle mehr. In der Auswertung des Gradientenrichtungsbilds 10 der Abbildung 2 verbleiben somit noch der Bereich des Objekts 4 und der Bereich 8, der kleinflächige Objekte, wie Steine und Blätter darstellt.

Zum weiteren Herausfiltern dieses für die Erkennung des Objekts 4 uninteressanten Bereichs 8 wird ein Binärsegmentationsalgorithmus auf das gefilterte Gradientenrichtungsbild 10 angewendet. Durch den Binärsegmentationsalgorithmus, der mehrfach mit unterschiedlichem Segmentationsparameter angewendet werden kann, werden Segmente gebildet, von denen die kleineren Segmente herausgefiltert werden können.

Zunächst wird als erster Segmentationsparameter der Richtungsbereich $R_1$ aus den Richtungsbereichen $R_1$ - $R_4$ ausgewählt und vorgegeben. Es werden alle Gradientenbildelemente 12 bzw. Gradienten G ausgewählt, die im Richtungsbereich $R_1$ liegen. Alle anderen Gradientenbildelemente 12 bzw. Gradienten G werden unterdrückt. Nun werden alle die Gradientenbildelemente 12 herausgefiltert, die keinen seitlichen Nachbarn haben. Nachbarn über Eck werden nicht berücksichtigt. Es kann alternativ eine höhere Schwelle gewählt werden, die nur Segmente mit zumindest drei oder mehr seitlich benachbarten Gradientenbildelementen 12 berücksichtigt. Ungefiltert verbleiben mehrere unterschiedlich große Segmente mit zusammenhängenden Gradientenbildelementen 12 mit gleichem Gradientenrichtungsbereich $R_1$.

Die Segmente S sind in Fig. 6 dargestellt, wobei der Übersichtlichkeit halber nur zwei Segmente S des Rich-

tungsbereichs $R_1$ mit Bezugzeichen versehen sind, nämlich die Segmente $S_{1,1}$ und $S_{1,2}$.

Der Binärsegmentationsalgorithmus wird mit jedem Richtungsbereichen $R_1$ - $R_4$ als Segmentationsparameter, also in diesem Beispiel insgesamt viermal, ausgeführt, so dass jeweils nur die beschriebenen Segmente $S$ übrig bleiben. Die Segmente $S_{1,1}$ - $S_{1,i}$ mit Gradienten $G$ im Richtungsbereich $R_1$, Segmente $S_{2,1}$ - $S_{2,i}$ mit Gradienten $G$ im Richtungsbereich $R_2$, Segmente $S_{3,1}$ - $S_{3,i}$ mit Gradienten $G$ im Richtungsbereich $R_4$ und Segmente $S_{4,1}$ - $S_{4,i}$ mit Gradienten $G$ im Richtungsbereich $R_4$ sind in Fig. 6 dargestellt, von denen der Übersichtlichkeit halber pro Richtungsbereich $R$ nur jeweils zwei mit Bezugszeichen versehen sind. Die Segmente $S$ stellen den für die Klassifizierung des Objekts 4 interessierenden Bereich der Abbildung 2 bzw. des Gradientenrichtungsbilds 10 dar. Durch das Herausfiltern der kleinen Segmente werden kleine Bildstrukturen aus der Abbildung 2 bzw. dem Gradientenrichtungsbild 10 herausgefiltert und damit auch die Strukturen im Bereich 8.

Es besteht nun die Möglichkeit, zunächst ein oder mehrere Objekte 4 im interessierenden Bereich zu erkennen. In diesem Ausführungsbeispiel ist jedoch nur ein Objekt 4 im interessierenden Bereich dargestellt, das beispielsweise anhand der dargestellten Segmente $S$ erkennbar ist. Es kann somit mit dem Schritt der Klassifizierung fortgefahren werden. Auch wenn im Voraus nicht bekannt ist, wie viele Objekte in der Aufnahme 2 wiedergegeben sind, kann direkt mit der Klassifizierung begonnen werden, wenn die Klasseneinteilung Klassen für mehrere Objekte, z. B. Personengruppen oder Fahrzeuggruppen enthält. Werden durch die Klassifizierung Gebäude oder andere Objekte erkannt, so können diese im Nachhinein von anderen Objekten getrennt werden, so dass interessierende Objekte alleine ausgewertet werden.

Zur Klassifizierung können die Gradienten $G$ mittels statistischer Methoden ausgewertet werden, beispielsweise indem die Anzahl von vorhandenen Gradienten $G$ eines jeden Richtungsbereichs $R$ ermittelt und ausgewertet werden. Liegen deutlich mehr Gradienten aus den Richtungsbereichen $R_2$ und $R_4$ vor, so hat das Objekt 4 eine waagerecht-längliche Struktur. Liegen deutlich mehr Gradienten $G$ aus den Richtungsbereichen $R_1$ und $R_3$ vor, so werden mehr senkrechte Linien abgebildet und das Objekt 4 hat eine senkrecht-längliche Struktur. Liegen ähnlich viele Gradienten $G$ aus den Richtungsbereichen $R_2$ und $R_4$ sowie $R_1$ und $R_3$ vor, so hat das Objekt 4 eher keine Vorzugsrichtung. Auf diese Weise können eine oder mehrere Bildeigenschaften ermittelt werden, die zur Klassifizierung herangezogen werden können. Ob diese Bildeigenschaften zur Klassifizierung ausreichen, hängt im Wesentlichen von der Klasseneinteilung ab. Ist die Klasseinteilung so, dass eine Klasse nur senkrecht-längliche Objekte 4 beinhaltet und eine andere Klasse nur waagerecht-längliche Objekte 4 und keine weiteren Klassen vorhanden sind, so kann die beschriebene statistische Auswertung zur Klassifizierung bereits ausreichen. In der Regel werden die Klassen jedoch nicht so eindeutig zueinander sein.

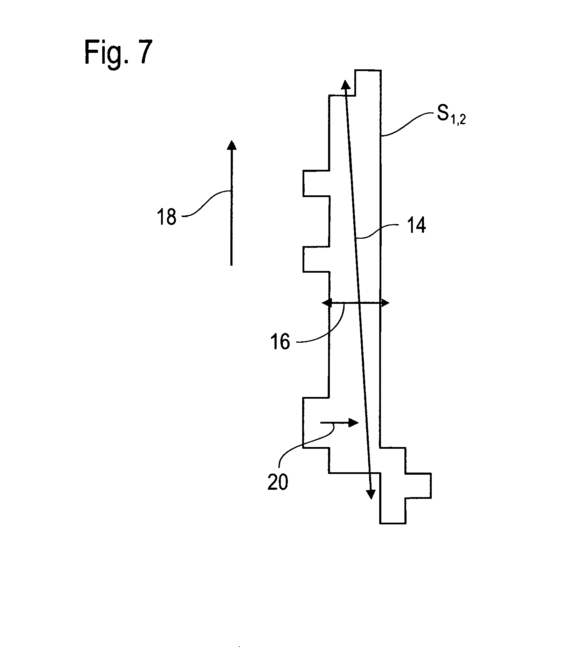

Weitere Bildeigenschaften werden daher aus den Eigenschaften bzw. Parametern der Segmente $S$ ermittelt. Zum einen sind dies segmentbezogene Parameter, die in Fig. 7 dargestellt sind. Fig. 7 zeigt das in Fig. 6 fett umrandete Segment $S_{1,2}$ alleine. Es ist charakterisiert durch seine Länge 14, die nicht die absolute Länge sondern eine gewichtete Länge 14 sein kann, seine gewichtete Breite 16, seine Hauptrichtung, die durch den Winkel der Länge 14 zu einer vorgegebenen Richtung 18 beschrieben ist, und den Richtungsbereiche $R$ seiner Gradienten $G$, der durch den Pfeil 20 angedeutet ist. Aus dem Verhältnis von Länge 14 zu Breite 16 kann eine Länglichkeit gebildet werden, aus eine Multiplikation von Länge und Breite eine Fläche.

Fünf Segmentparameter, nämlich

a. eine Fläche eines Segments $S$,
b. die Länglichkeit bzw. die Ausdehnung in Form von Minimal- und Maximalkoordinaten
c. die Hauptrichtung eines Segments $S$
d. die gemittelte Ausdehnung des Segments $S$ in seiner Hauptrichtung und
e. die Schwerpunktlage des Segments $S$ im Bild

sind Formparameter oder Formeigenschaften des Segments $S$.

f. Die Gradientenrichtung dient als weitere Segmenteigenschaft.

Als Bildeigenschaften mehrerer Segmente im Objekt 4 oder Bereich werden Beziehungen zwischen Segmenten $S$ des Objekts 4 untersucht. Diese sind beispielsweise:

g. Anzahl und Flächengröße der Segmente $S$,
h. Anzahl der Übergänge zwischen den Segmenten $S$,
i. Lage von Segmenten $S$ mit gleichem Richtungsbereich $R$ im Objekt 4 und zueinander,
j. Lage von Segmenten $S$ mit entgegengesetztem Richtungsbereich $R$ im Objekt 4 und zueinander,
k. Lage von Segmenten $S$ mit gleichem und entgegengesetztem Richtungsbereich $R$ im Objekt 4 und zueinander.

Eine Möglichkeit der Auswertung dieser Eigenschaften oder Parameter besteht darin, einen mehrdimensionalen Parameterraum - aufgespannt durch mehrere der Parameter a - k, wobei die Gradientenrichtung R als eine diskrete Dimension verwendet werden kann - auszuwerten. In diesem Parameterraum nehmen die Segmente S jeweils eine Position ein, so dass die Segmentgruppe einen Cluster bildet. Der Cluster weist Clustereigenschaften auf, wie die Lage des Clusters im Parameterraum und/oder eine Dichte des Clusters.

Clustereigenschaften können einzelnen Klassen zugeordnet sein, so dass der Cluster und damit das Objekt 4 einer Klasse zugewiesen wird. Die Zuordnung kann durch Klassifikationsregeln geschehen, durch die jeder Klasse ein oder mehrere Raumbereiche des Parameterraums zugewiesen werden können. Die Klassifikationsregeln können außerdem festlegen, welche der Parameter a - k berücksichtigt werden. So kann eine einfachere Klassifizierung beispielsweise nur einzelne der Parameter a - k berücksichtigen, so dass die Dimension des Parameterraums geringer ist.

Die Klassifikationsregeln können außerdem die Art des Gradienten G, also auf welchen Bildparameter er sich bezieht, z. B. Helligkeit, Farbe oder dergleichen, die Rechenmethode der Gradientenbildung, die Richtungsbereiche R, die Schwelle für die Größenfilterung der Gradienten und/oder die Schwelle für die Größenfilterung der Segmente $S_i$ festlegen. Weiter können die Klassifikationsregeln die Art der Objekte für jede Klasse festlegen, z. B. Personen, Personengruppen, bodengebundene Fahrzeuge, besondere Fahrzeuge, wie PKW, Lastkraftwagen, Kettenfahrzeuge oder Panzer, Gebäude, stangenartige Objekte, wie Masten, zur besseren Unterscheidung von Personen, Koffer, Waffen oder einzelne Waffengruppen, und vieles mehr.

Bei dem Beispiel aus Fig. 1 und Fig. 6 ist der Charakter der Segmentgruppe geprägt durch zwei große und längliche Segmente $S_{3,1}$ und $S_{1,1}$, mit einer im Bild aufrechten Hauptrichtung. Weiter prägen zwei mittelgroße und längliche Segmente $S_{1,2}$ und $S_{3,2}$ die Segmentgruppe, die ebenfalls eine im Bild aufrechten Hauptrichtung haben. Die Segmente $S_{1,2}$ und $S_{3,2}$ sind zwischen den Segmenten $S_{3,1}$ und $S_{1,1}$ angeordnet und haben von links nach rechts gesehen eine alternierende Gradientenrichtung $R_3$ und $R_1$, sodass zwischen den Segmenten $S_{3,1}$ und $S_{3,2}$ und den Segmente $S_{1,2}$ und $S_{1,1}$ jeweils ein Segment $S_{1,2}$ und $S_{3,2}$ liegt. Diese Formation ist typisch für ein längliches, aufrechtes und nicht stangenartiges Objekt 4 und kann einer Klasse für eine Einzelperson zugewiesen werden. Die beschriebene Formation ist durch den Cluster im Parameterraum vollständig beschrieben.

Personengruppen sind durch mehrere ähnlich große und längliche Segmente der Richtungsbereiche $R_1$ und $R_3$ charakterisiert, die räumlich eng beieinander liegen. Bodengebundene Fahrzeuge hingegen zeigen in jeder Perspektive größere waagerechte Segmente der Richtungsbereiche $R_2$ und $R_4$, die bei Personen oder Personengruppen nicht oder nur wenig auftreten. Auf diese Weise können Personen und Fahrzeuge in einer Aufnahme durch Klassifizierung in unterschiedliche Klassen voneinander unterschieden werden. Eine weitere Klasse kann für Personengruppen geschaffen werden.

Eine einfache und zuverlässige Klassifizierung kann sich zunutze machen, dass Objekte in der Regel durch ausgeprägte Segmentpaare im Gradientenrichtungsbild geprägt sind. Auf diese Weise werden z. B. vertikale Gradientenrichtungssegmente, also Segmente S mit horizontalem Gradienten, welche die linke und rechte Begrenzung des Abbilds einer Person darstellen können, miteinander in Verbindung gesetzt. Ein rechtes und ein linkes Segment bilden ein so genanntes antiparalleles Segmentpaar. Es werden Segmentpaare aus dem Gradientenrichtungsbild ausgewählt, die einen vordefinierten Maximalabstand zwischen den sich gegenüberliegenden Segmenten nicht überschreiten.

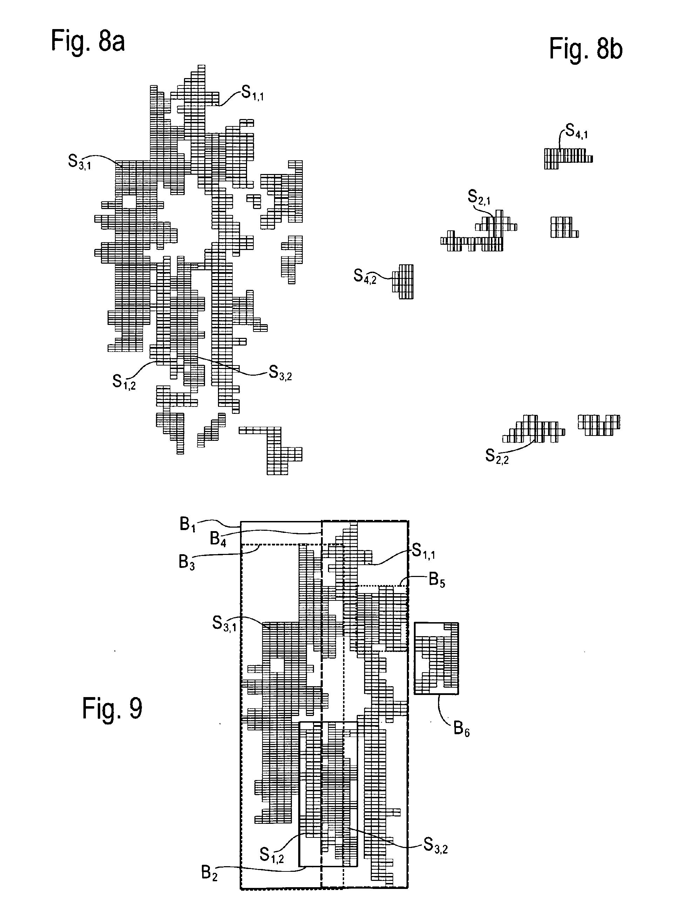

Ein Beispiel zur Bildung von Segmentpaaren ist in den Figuren 8a und 8b wiedergegeben. Fig. 8a zeigt alle Segmente S aus Fig. 6 mit einem Gradienten G in einem waagerechten Richtungsbereich $R_1$, $R_3$. Hierzu werden alle anderen Segmente S herausgefiltert. Sie sind in Fig. 8b dargestellt. Aus den beiden Abbildungen wird deutlich, das das Objekt 4 weit mehr durch senkrechte Linien im Bild charakterisiert ist als durch waagerechte Linien. Insofern wird der Schwerpunkt bei der Auswertung der Segmente S und der Klassifizierung auf die Segmente mit waagerechtem Gradienten gelegt.

Aus diesen Segmenten werden nun antiparallele Segmentpaare herausgesucht. Und durch Segmentbereiche einander zugeordnet. Solche Segmentbereiche sind in Fig. 9 dargestellt. Zunächst einmal werden die beiden größten antiparallelen Segmente $S_{3,1}$ und $S_{1,1}$ zu einem Segmentpaar zugeordnet. Anschließend wird der Segmentbereich $B_1$ gebildet, der ein Rechteck ist, das beide Segmente $S_{3,1}$ und $S_{1,1}$ umschließt. Allgemeiner gesprochen wird nach antiparallelen Segmenten gesucht, welche einen Bereichsabschluss nach oben und nach unten ermöglichen, bzw. in eine Richtung die zumindest im Wesentlichen senkrecht zur Gradientenrichtung ist. Der Segmentbereich kann jedoch auch nach anderen Kriterien gebildet werden. Es können weitere Segmentpaare gebildet werden, von denen in Fig. 9 einige dargestellt sind. So umschließt der Segmentbereich $B_2$ die Segmente $S_{1,2}$ und $S_{3,2}$, der Segmentbereich $B_3$ die Segmente $S_{3,1}$ und $S_{1,2}$, der Segmentbereich $B_4$ die Segmente $S_{1,1}$ und $S_{3,2}$ und die Segmentbereiche $B_5$ und $B_6$ zwei weitere Segmentpaare.

Die Segmentbereiche $B_1$ bis $B_5$ überlappen einander, wohingegen der Segmentbereich $B_6$ ein separater Segmentbereich ist. Die Segmentbereiche $B_1$ bis $B_5$ werden daher als ein zusammenhängender und übergeordneter Segmentbereich B ausgewertet, der in Fig. 9 zufällig gleich dem Segmentbereich $B_1$ ist. Bereiche ohne Segmentpaare werden nicht weiter betrachtet.

Die Segmentbereiche B und B6 bilden eine Menge von Untersuchungsbereichen oder Regions Of Interest (ROI). Aus Eigenschaften dieser Segmentbereiche wird ein abgebildetes Objekt klassifiziert. Die Segmentbereiche können, unabhängig von ihrer Bildungshistorie, Segmente der vier verschiedenen Richtungen enthalten. Innerhalb der Segmentbereiche werden, basierend auf den enthaltenen Segmenten, verschiedene Bereichseigenschaften berechnet.

Die Bereichseigenschaften

A. Minimalkoordinaten
B. Maximalkoordinaten
C. Breite und
D. Höhe

sind unmittelbare Bereichseigenschaften.

Die folgenden weiteren Eigenschaften beziehen sich jeweils auf alle enthaltenen Segmente von einer der vier Richtungen:

E. Gesamtsegmentfläche in einem Segmentbereich pro Richtung
F. Größte Segmentfläche in einem Segmentbereich pro Richtung
G. Richtungsfläche auf Gesamtsegmentfläche innerhalb des Segmentbereich normiert in %
H. Fläche in der rechten Hälfte des Segmentbereichs
I. Fläche in der linken Hälfte des Segmentbereichs
J. Fläche in der oberen Hälfte des Segmentbereichs
K. Fläche in der unteren Hälfte des Segmentbereichs
L. Fläche im oberen Viertel des Segmentbereichs
M. Fläche in den mittleren 2-Viertel (horizontal) des Segmentbereichs
N. Fläche im unteren Viertel
O. Fläche im linken Viertel
P. Fläche in den mittleren 2-Viertel (vertikal)
Q. Fläche im rechten Viertel
R. Mittlere Breite der Segmentrechtecke
S. Mittlere Höhe der Segmentrechtecke
T. Längstes Segment im Segmentbereich
U. Länge des längsten Segments im Segmentbereich
V. Rechteckbreite und -höhe des längsten Segmentbereichs
W. Verhältnis Breite zu Höhe des Rechtecks des längsten Segmentbereichs
X. Verhältnis längste Länge zur Segmentbereich-Breite und zu Segmentbereich-Höhe
Y. Verhältnis mittlere Rechteckbreite zur Segmentbereich-Breite
Z. Verhältnis mittlere Rechteckhöhe zur Segmentbereich-Höhe
AA. Richtungsdichte im Segmentbereich
BB. Mittlere Richtungsfläche im Segmentbereich
CC. Gewichtete mittlere Segmentbreite/gewichtete mittlere Segmenthöhe
DD. Verhältnis Segmentlänge zur mittleren Ausdehnung in der Hauptrichtung
EE. Weitere räumliche Verteilungsmerkmale von Segmenten innerhalb eines Segmentbereichs
FF. Anzahl antiparalleler Paare und
GG. deren mittlerer Abstand

Die mittels der Segmente berechneten Bereichsmerkmale werden verwendet, um zu entscheiden, ob sich innerhalb der Segmentbereiche ein gesuchtes Objekt befindet oder nicht. In der dargestellten Anwendung werden Personen gesucht. Um dies zu entscheiden, werden Klassifikationregeln aufgestellt. Diese Regeln sind in Form von einfachen Bedingungen für die Merkmalswerte dargestellt. Dabei können die Werte sowohl mit absolut vorgegebenen Vergleichswerten verglichen werden als auch untereinander verglichen werden. Es gibt zwei Arten von Bedingungen: Für-Bedingungen sprechen für das Vorhandensein der gesuchten Objektart, Gegen-Bedingungen sprechen gegen das Vorhandensein der gesuchten Objektart. Die Einzelentscheidungen aller Bedingungen können linear miteinander verknüpft werden zu einer Gesamtaussage. Die Bedingungen und deren Verknüpfungen können anhand von Bildbeispielen festgelegt werden. Für jeden Segmentbereich werden die gleichen Klassifikationsregeln angewandt. Allerdings werden die Klassifikationsregeln geändert, wenn ein anderes Objekt gesucht wird, z. B. ein Fahrzeug. So wird jeder Objektklasse ein Satz eigener Klassifikationsregeln zugeordnet, wobei die den Klassifikationsregeln zugrunde liegenden Bereichsmerkmale die gleichen bleiben können.

Die in einem Bild gefundenen Klassifikationsergebnisse werden zur weiteren Verwendung an eine Plattform weitergeleitet, bei welcher die Verarbeitungsergebnisse weiterer Sensoren, z. B. weiterer Kameras oder anderer Sensoren, zusammenfließen. Ergebnisse mehrerer Sensoren werden miteinander verknüpft zwecks Vervollständigung der Gesamtinformation. Die Ergebnisse eines oder mehrerer Sensorkanäle können auch als Hinweise für den gezielten Einsatz anderer Sensoren verwendet werden.

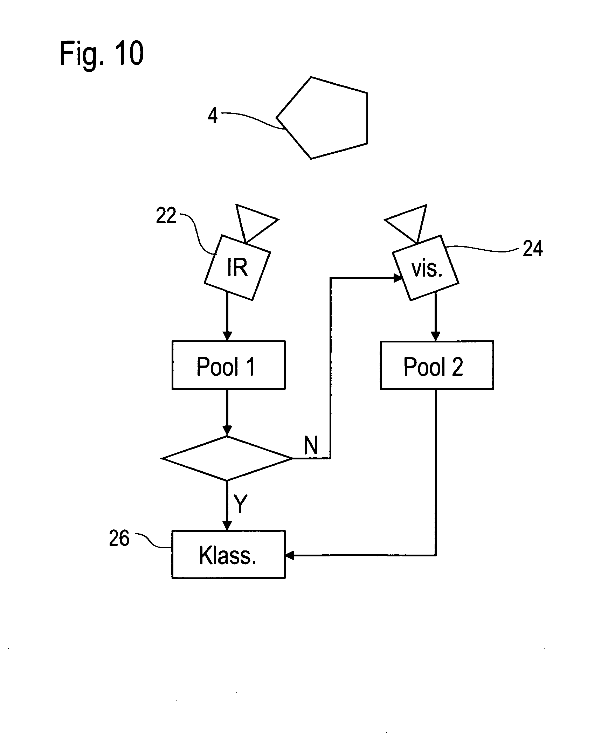

Ein Beispiel hierfür ist in Fig. 10 dargestellt. Ein Objekt 4 wird von einer ersten Kamera 22 abgebildet. Das Bild wird wie oben beschrieben untersucht, wobei ein erster Pool von Merkmalen, z. B. Bereichsmerkmalen, gebildet wird. Gelingt die Klassifikation des Objekts 4, also deren Zuordnung zu einer Objektklasse, ausreichend gut, so wird die Klassifikation durchgeführt, wie in Schritt 26 dargestellt ist. Genügt die Klassifikation anhand des ersten Merkmalspools nicht einer vorgegebenen Klassifikationsgüte, so wird der Befehl an eine zweite Kamera 24 gegeben ein weiteres Bild vom Objekt 4 zu machen. Im dargestellten Beispiel ist das erste Bild ein IR-Bild, z. B. ein Wärmebild des Objekts 4. Das zweite Bild kann ein Bild im gleichen Spektrum aber aus einer anderen Richtung sein. In Fig. 10 ist das Bild im visuellen Spektralbereich aufgenommen und zusätzlich aus einer anderen Richtung. Aus ihm wird ein zweiter Merkmalspool gewonnen.

Nun kann die Klassifikation alleine aus dem zweiten Merkmalspool erfolgen oder aus den Merkmalen beider Pools zusammen, je nachdem, welche Klassifikation besserer Güte ist.

Das beschriebene Verfahren mit seinen angegebenen Varianten kann zur Erkennung verschiedenster Objekte verwendet werden. Das Verfahren zur Erkennung von Fahrzeugen aus Infrarotbildern kann analog zum Personenerkennungsverfahren erfolgen. Allerdings werden zur Fahrzeugerkennung nicht die antiparallelen Segmentpaare von vertikalen Übergängen bzw. Linien im Bild, sondern die antiparallelen Segmentpaare zu waagerechten Übergängen im Bild verwendet. Außerdem unterscheidet sich der Inhalt der Klassifikationsregeln, nicht aber die innerhalb der Segmentbereiche verwendeten Bereichsmerkmale.

Zur Erkennung von alleine gelassenen Gepäckstücken ist es nicht ausreichend, nur nach den Gepäckstücken zu suchen. Erfolg versprechender ist die Zuordnung des Gepäckstücks zu einer Person. Hierfür wird die Person als solche erkannt, z. B. wie oben beschrieben. Durch die Person selbst wird ein Interessensbereich definiert, in welchem automatisch nach Gepäckstücken gesucht wird. Hierfür können umlaufende Linien ausgewertet werden, bzw. zyklische Segmentverbindungen im Gradientenbild. Es werden Folgen von Segmenten gebildet, welche der Reihe nach einen rechten, einen oberen, einen linken und einen unteren Objektrand verbinden und das Objekt als Ganzes darstellen. Alle derartigen Segmentverbindungen werden anhand von geeigneten Klassifikationsregeln bewertet, um zu entscheiden, ob es sich um ein Gepäckstück oder um ein anderes Hintergrundobjekt handelt.

Die Entscheidung wird erleichtert durch die unmittelbare Nähe des Gepäckstückkandidaten zu einer Person. Hierzu wird die Bewegung der Person und des Gepäckstücks erfasst. Bewegt sich das Gepäckstück zunächst mit der Person und nach einer Weile nicht mehr, wobei sich die Person vom Gepäckstück entfernt, so kann eine potentielle Gefahrensituation erfasst werden.

Eine weitere Anwendung des Verfahrens liegt in der Waffenerkennung. So kann aus Bildern z. B. eines Terahertz-Scanners zunächst eine Person erkannt werden. Anschließend wird innerhalb des Bereichs der Person nach weiteren Objekten gesucht, für die Klassifikationsregeln vorgegeben sind entsprechend der Formen der gesuchten Objekte.

Durch das erfindungsgemäße Verfahren können Objekte aller Art schnell und zuverlässig nach Formmerkmalen in einem Bild untersucht werden. Die Formmerkmale sind in Klassifikationsregeln wiedergegeben, die unter Verwendung von Bildmerkmalen angewendet werden. Hierfür sind zunächst prägende Formmerkmale eines Objekts festzulegen, zweckmäßigerweise aus verschiedenen Betrachtungsrichtungen. Anschließend werden diese zu Klassifikationsregeln umformuliert, die Gradientenbildeigenschaften als Klassifikationsparameter verwenden.

Bezugszeichenliste

2 Abbildung

4 Objekt

6 Hintergrund

8 Bereich

10 Gradientenrichtungsbild

12 Gradientenbildelement

14 Länge

16 Breite

18 Richtung

20 Pfeil

22 Kamera

24 Kamera

26 Schritt

B Segmentbereich

E Pixel

G Gradient

H Helligkeit

R Richtungsbereich

S Segment


**Patentansprüche**

1. Bildverarbeitungsverfahren zum Klassifizieren eines Objekts (4), bei dem aus einer Aufnahme des Objekts (4) ein Gradientenrichtungsbild (10) erstellt wird und das Klassifizieren des Objekts (4) anhand von Bildeigenschaften des Gradientenrichtungsbilds (10) durchgeführt wird.

2. Bildverarbeitungsverfahren nach Anspruch 1,
   **dadurch gekennzeichnet,**
   **dass** zum Ermitteln der Bildeigenschaften ein Binärsegmentationsalgorithmus angewendet wird, mit dem aus dem Gradientenrichtungsbild (10) zumindest ein binäres Bild entsteht, aus dem Bildeigenschaften ermittelt werden.

3. Bildverarbeitungsverfahren nach Anspruch 1 oder 2,
   **dadurch gekennzeichnet,**
   **dass** einzelne Segmente (S) des Gradientenrichtungsbilds (10), die jeweils aus ein zusammenhängendes Bildgebiet bildenden Gradientenbildelementen (12) bestehen, ermittelt werden und die Bildeigenschaften des Gradientenrichtungsbilds (10) zumindest eine Segmenteigenschaft zumindest eines Segments (S) enthalten.

4. Bildverarbeitungsverfahren nach Anspruch 3,
   **dadurch gekennzeichnet,**
   **dass** die Segmente (S) jeweils ein zusammenhängendes Bildgebiet bilden, in dem die Gradientenrichtungen aller Gradientenbildelemente (10) innerhalb eines Richtungsbereichs (R) liegen.

5. Bildverarbeitungsverfahren nach Anspruch 3 oder 4,
   **dadurch gekennzeichnet,**
   **dass** eine Segmenteigenschaft ein Formparameter zumindest eines Segments (S) ist.

6. Bildverarbeitungsverfahren nach einem der Ansprüche 3 bis 5,
   **dadurch gekennzeichnet,**
   **dass** als Segmenteigenschaften Formen von zumindest zwei Segmenten (S) und deren Lage zueinander verwendet werden.

7. Bildverarbeitungsverfahren nach einem der vorhergehenden Ansprüche,
**dadurch gekennzeichnet,**
**dass** ein Segmentpaar aus zwei Segmenten (S) des Gradientenrichtungsbilds (10) ermittelt wird, die jeweils aus solchen Gradientenbildelementen (12) bestehen, die ein zusammenhängendes Bildgebiet eines Richtungsbereichs (R) bilden.

8. Bildverarbeitungsverfahren nach Anspruch 7,
**dadurch gekennzeichnet,**
**dass** nur solche Segmente zur Bildung eines Segmentpaars verwendet werden, die einen vorgegebenen Maximalabstand zueinander nicht überschreiten.

9. Bildverarbeitungsverfahren nach Anspruch 7 oder 8,
**dadurch gekennzeichnet,**
**dass** ein Bildbereich, in dem das Segmentpaar zumindest überwiegend liegt, ermittelt wird und zumindest eine Bereichseigenschaft eines solchen Segmentbereichs als Bildeigenschaft zur Klassifizierung des Objekts verwendet wird.

10. Bildverarbeitungsverfahren nach Anspruch 9,
**dadurch gekennzeichnet,**
**dass** einander überlappende Segmentbereiche mehrerer Segmentpaare zu einem übergeordneten Segmentbereich vereinigt werden.

11. Bildverarbeitungsverfahren nach Anspruch 9 oder 10,
**dadurch gekennzeichnet,**
**dass** die Bereichseigenschaft eine räumliche Verteilung von Segmenten (S) in einem Segmentbereich ist.

12. Bildverarbeitungsverfahren nach einem der Ansprüche 9 bis 11,
**dadurch gekennzeichnet,**
**dass** eine Klassifizierung unterschiedlicher Objekte unter Verwendung derselben Bereichseigenschaften jedoch verschiedener Klassifizierungsregeln erfolgt.

13. Bildverarbeitungsverfahren nach einem der vorhergehenden Ansprüche,
**dadurch gekennzeichnet,**
**dass** das Objekt (4) von mehreren Kameras aufgenommen wird, die jeweils zumindest eine Aufnahme des Objekts (4) liefern, aus den Aufnahmen jeweils ein Gradientenrichtungsbild (10) erstellt wird, aus denen jeweils Bildmerkmale abgeleitet werden, unter Verwendung derer die Objektklassifizierung vorgenommen wird.

14. Bildverarbeitungsverfahren nach Anspruch 13,
**dadurch gekennzeichnet,**
**dass** aus Bildmerkmalen, die aus einer Aufnahme einer Kamera gebildet wurden, eine Anweisung zur Aufnahme eines weiteren Bilds durch eine andere Kamera gebildet wird und die Objektklassifizierung unter Verwendung von Bildmerkmalen aus beiden Aufnahmen erfolgt.

15. Bildverarbeitungsverfahren nach einem der vorhergehenden Ansprüche,
**dadurch gekennzeichnet,**
**dass** aus der Klassifizierung als Objekte eine Person und ein Gegenstand erkannt wird, der Gegenstand der Person zugeordnet wird und ein Bewegungsverlauf des Gegenstands zu einem Bewegungsverlauf der Person in Beziehung gesetzt wird.

Fig. 1

6

2

4

8

Fig. 2

| $E_7$ | $E_8$ | $E_1$ |
|---|---|---|
| $H_7$ | $H_8$ | $H_1$ |
| $H_6$ | $H_0$ | $H_2$ |
| $H_5$ | $H_4$ | $H_3$ |

$E_6$    $E_2$

$E_0$

$E_5$    $E_4$    $E_3$

Fig. 3

| $E_7$ | $E_8$ | $E_1$ |
|---|---|---|
| | | G |
| $E_6$ | | $E_2$ |
| | | |
| $E_5$ | $E_4$ | $E_3$ |

10

12

Fig. 4

Fig. 5

Fig. 6

Fig. 7

$S_{1,2}$

18

14

16

20

Fig. 8a

$S_{1,1}$

$S_{3,1}$

$S_{1,2}$   $S_{3,2}$

Fig. 8b

$S_{4,1}$

$S_{2,1}$

$S_{4,2}$

$S_{2,2}$

$B_1$
$B_4$
$B_3$
$S_{1,1}$
$B_5$

$S_{3,1}$

$B_6$

Fig. 9

$B_2$   $S_{1,2}$   $S_{3,2}$

# Fig. 10

Europäisches
Patentamt

European
Patent Office

Office européen
des brevets

**EUROPÄISCHER RECHERCHENBERICHT**

**Nummer der Anmeldung**

EP 11 00 3136

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HANSON A ET AL: "The Visions Image-Understanding System", 1. Januar 1988 (1988-01-01), ADVANCES IN COMPUTER VISION, ERLBAUM, HILLSIDE, NJ, USA, PAGE(S) 1 - 114, XP008139635, ISBN: 0-89859-648-3 * Seite 24 - Seite 31 * * Seiten 39,43-46 * * Seite 50 - Seite 66 * | 1-12,15 | INV. G06K9/46 |
| X | CAGLAR M B ET AL: "Self Correcting Tracking for Articulated Objects", AUTOMATIC FACE AND GESTURE RECOGNITION, 2006. FGR 2006. 7TH INTERNATIO NAL CONFERENCE ON SOUTHAMPTON, UK 10-12 APRIL 2006, PISCATAWAY, NJ, USA,IEEE, 10. April 2006 (2006-04-10), Seiten 609-616, XP010911674, DOI: DOI:10.1109/FGR.2006.100 ISBN: 978-0-7695-2503-7 * Abschnitt 3 * | 1-15 | |
| X | CAGLAR M B ET AL: "Open Hand Detection in a Cluttered Single Image using Finger Primitives", COMPUTER VISION AND PATTERN RECOGNITION WORKSHOP, 2006 CONFERENCE ON NEW YORK, NY, USA 17-22 JUNE 2006, PISCATAWAY, NJ, USA,IEEE, PISCATAWAY, NJ, USA, 17. Juni 2006 (2006-06-17), Seiten 148-148, XP010922965, DOI: DOI:10.1109/CVPRW.2006.151 ISBN: 978-0-7695-2646-1 * Abschnitte 3 und 4 * | 1-15 | RECHERCHIERTE SACHGEBIETE (IPC) G06K |

-/--

Der vorliegende Recherchenbericht wurde für alle Patentansprüche erstellt

| Recherchenort | Abschlußdatum der Recherche | Prüfer |
|---|---|---|
| Den Haag | 28. Juli 2011 | Alecu, Teodor Iulian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 2 383 681 A1**

Europäisches
Patentamt

European
Patent Office

Office européen
des brevets

## EUROPÄISCHER RECHERCHENBERICHT

**Nummer der Anmeldung**

EP 11 00 3136

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ET AL: "Using Perceptual Grouping for Road Recognition", International Archives of Photogrammetry and Remote Sensing, vol 31, 1. Januar 1996 (1996-01-01), Seiten 202-206, XP55003452, Gefunden im Internet: URL:http://www.isprs.org/proceedings/XXXI/congress/part3/202_XXXI-part3.pdf [gefunden am 2011-07-22] * Abschnitte 2-4 * ----- | 1-12 | |
| X | ET AL: "Building reconstruction and visualization from LIDAR data", INTERNATIONAL ARCHIVES OF PHOTOGRAMMETRY REMOTE SENSING AND SPATIAL INFORMATION SCIENCES, vol. 34, 1. Januar 2003 (2003-01-01), Seiten 151-156, XP55003454, Gefunden im Internet: URL:http://www.isprs.org/proceedings/XXXIV/6-W12/proceedings/32.pdf [gefunden am 2011-07-22] * Abschnitt 3.2 * ----- | 1-12 | **RECHERCHIERTE SACHGEBIETE (IPC)** |
| X | IQBAL Q ET AL: "Retrieval by classification of images containing large manmade objects using perceptual grouping", PATTERN RECOGNITION, ELSEVIER, GB, Bd. 35, Nr. 7, 1. Juli 2002 (2002-07-01), Seiten 1463-1479, XP004345147, ISSN: 0031-3203, DOI: DOI:10.1016/S0031-3203(01)00139-X * Abschnitte 2 und 3 * ----- -/-- | 1-12 | |

Der vorliegende Recherchenbericht wurde für alle Patentansprüche erstellt

| Recherchenort | Abschlußdatum der Recherche | Prüfer |
|---|---|---|
| Den Haag | 28. Juli 2011 | Alecu, Teodor Iulian |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
  Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 11 00 3136

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | BURNS J B ET AL: "EXTRACTING STRAIGHT LINES", IEEE TRANSACTIONS ON PATTERN ANALYSIS AND MACHINE INTELLIGENCE, IEEE SERVICE CENTER, LOS ALAMITOS, CA, US, Bd. PAMI-08, Nr. 4, 1. Juli 1986 (1986-07-01), Seiten 425-455, XP001016046, ISSN: 0162-8828, DOI: DOI:10.1109/TPAMI.1986.4767808 * das ganze Dokument * ----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 28. Juli 2011 | Alecu, Teodor Iulian |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
     Dokument

EPO FORM 1503 03.82 (P04C03)